# EUROPEAN PATENT SPECIFICATION

(11) **EP 1 040 676 B1**
(45) Date of publication and mention of the grant of the patent: **11.10.2006**
(21) Application number: 98961269.2
(22) Date of filing: 15.12.1998
(51) Int. Cl.: H04Q 3/00

(54) **METHOD AND SYSTEM FOR THE TRANSMISSION AND MODIFICATION OF INTELLIGENT NETWORK PARAMETERS**
VERFAHREN UND VORRICHTUNG ZUR ÜBERTRAGUNG UND ÄNDERUNG VON INTELLIGENTEN NETZWERKPARAMETERN
PROCEDE ET SYSTEME POUR TRANSMETTRE ET MODIFIER DES PARAMETRES DE RESEAU INTELLIGENT

(30) Priority: 16.12.1997 FI 974531; 22.12.1997 FI 974604
(43) Date of publication of application: 04.10.2000
(73) Proprietor: TeliaSonera Finland Oyj, 00510 Helsinki (FI)
(72) Inventor: ALA-LUUKKO, Sami, FIN-00280 Helsinki (FI); HUOPANIEMI, Juho, FIN-02600 Espoo (FI); PERÄ, Olli, FIN-90570 Oulu (FI)
(74) Representative: Simmelvuo, Markku Kalevi
(86) International application number: PCT/FI1998/000983
(87) International publication number: WO 1999/034617

(56) References cited:
- EP-A2- 0 847 176
- WO-A1-97/06625
- WO-A1-97/16007
- WO-A1-97/23988
- WO-A1-97/44943

## Description

The present invention relates to telecommunication systems. In particular, the invention relates to a method and system for modification or transmission of intelligent network service data or service data parameters by means of another telecommunication network.

At present, there is a large variety of services available in both wired and mobile telephone networks in respect of the options provided by the operator of the wired or wireless telephone network. These services may include e.g. permanent or remotely controlled call transfer, call waiting, suppression of number display, advance notice of billing to the subscriber and similar services. For the subscriber, the use of these services is optional, i.e. the subscriber can decide when to use each service. In addition, intelligent network systems use a number of other parameters that are preferably modified directly by the subscriber without requiring any action by the teleoperator or service provider, which would necessitate employment of resources in customer service.

In prior art, a system is known in which the parameters of intelligent network services are modified via an Internet access. The implementation requires that the user have an Internet access available. Another prior-art solution is the use of a menu service based on tone frequency signals. The problem is that the solution involves a difficult user interface and is slow in use. Moreover, long number sequences are difficult to visualise. The SSP centres used in intelligent network applications are usually not able to identify tone frequency signals during a call but only during call setup.

As a piece of prior art, WO 9723988 discloses a control apparatus for a telecommunication network, which can be configured through another apparatus or telecommunication network. A user can use a terminal device, which is connected to another apparatus or telecommunication network. In a preferred embodiment of WO 9723988, another telecommunication network is internet and the configuration data is transferred through the HTTP protocol. The configurable telecommunication network is a switched telephone network in a preferred embodiment. The second network creates a suitable interface for the user for inputting the control data.

The CAMEL architecture involves a USSD-based user interface. The CAMEL architecture (CAMEL, Customised Applications for Mobile Network Enhanced Logic) is used to provide operator-specific intelligent network services even for subscribers who have moved outside the mobile communication network of their home operator under the international roaming system. USSD operations (USSD, Unstructured Supplementary Service Data) can be used to transmit unstructured supplementary service data between a mobile station and the telecommunication network. The USSD-based user interface used in conjunction with the CAMEL architecture requires that the service control point of the mobile communication network support the MAP interface (MAP, Mobile Application Part) in question.

The object of the present invention is to eliminate or at least significantly reduce the drawbacks listed above. A specific object of the present invention is to disclose a new type of method and a new type of system that enable the user to control intelligent network services by means of a terminal device connected to another telecommunication network.

As for the features characteristic of the invention, reference is made to the claims.

The invention relates to a method for modifying an intelligent network service parameter in a telecommunication system comprising an intelligent network, a service data point comprised in the intelligent network, a digital mobile telephone network, means for connecting the intelligent network to the mobile telephone network and a terminal device connected to the mobile telephone network. In the method, the service parameter is transmitted using the terminal device in the form of a text message to a gateway, the text message is converted in the gateway into the form of an intelligent network service parameter and transmitted to the data point of the intelligent network. In an embodiment of the method, an acknowledgement message is returned from the intelligent network data point to the gateway, the acknowledgement message is converted into the form of a text message and sent to the terminal device. The record to be modified in the intelligent network data point is preferably identified in the gateway by the calling subscriber number transmitted in the text message signalling. In an embodiment, the record to be modified in the intelligent network data point is identified in the gateway by the contents of the text message.

In an embodiment, the information is transmitted between the terminal device and the gateway in the form of a short message, in another embodiment by using the USSD-MAP protocol and in yet another by using the WAP protocol (WAP, Wireless Application Protocol). In the GSM mobile telephone system, the short-message service allows transmission of text messages from a mobile station to another even if the receiver is not reachable at the time. A text message sent as a short message may have a maximum length of 160 characters. The WAP protocol defines a standard for applications that provide services for wireless network terminal equipment. By using the WAP, it is possible to connect e.g. with Internet servers by telephone.

The invention also relates to a telecommunication system for modification of an intelligent network service parameter, said system comprising an intelligent network, a digital mobile telephone network, means for connecting the intelligent network to the mobile telephone network, and terminal equipment connected to the mobile telephone network. The intelligent network comprises a service data point. The system comprises means for sending the service parameter in the form of a text message from the terminal equipment to a gateway, means for converting the text message in the gateway into the form of an intelligent network service parameter and transmitting it to the service data point of the intelligent network. The system preferably comprises means for returning an acknowledgement message from the intelligent network data point to the gateway, means for converting the acknowledgement message in the gateway into the form of a text message and sending it to the terminal equipment.

In a preferred embodiment of the invention, the gateway comprises means by which the intelligent network data point record to be modified is identified by the calling subscriber number, i.e. A-number, transmitted in the text message signalling. In an embodiment, the system comprises means for identifying the record by the contents of the text message. The system preferably comprises means for transmitting information from the terminal equipment to the gateway e.g. in the form of a short message, using the USSD or the WAP protocol.

The invention enables the user interface between intelligent network services and the user to be implemented with the existing service development properties of the service control point. The user interface can be implemented more flexibly than by identification of tone frequency signals. Using the short message service, a mobile telephone subscriber can modify his/her services any time when reachable via the telecommunication network. The invention also permits communication between a GSM subscriber and an intelligent network in a network other than the GSM network, e.g. the service logic of a wired telephone network.

In the following, the invention will be described by referring to the attached drawings, wherein
Fig. 1 presents an example of signalling according to the present invention;
Fig. 2 presents an example of signalling according to another embodiment;
Fig. 3 presents a diagram representing a system according to the invention.

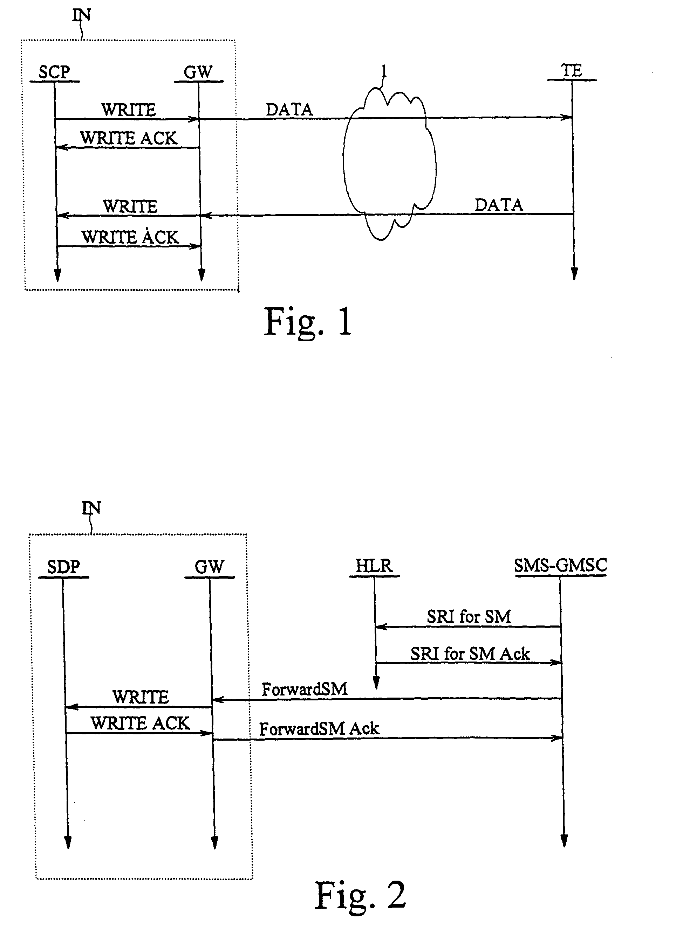

The diagram in Fig. 1 presents an example illustrating the signalling between the service control point SCP and the user's terminal equipment TE. The gateway GW comprises means for its connection to the service control point SCP and to the second telecommunication network 1. The second telecommunication network 1 may be e.g. a digital mobile communication network or the Internet. When the service control point SCP sends information or a request to the terminal equipment TE, it is transmitted to the gateway GW e.g. using a WRITE message. If the gateway GW supports transmission of information e.g. in text form, then the service control point can generate this type of information itself. In this case, the gateway GW will only have to convert this information into a form compatible with the properties of the second telecommunication network 1. In an embodiment, the service control point SCP indicates, using a suitable indicator, e.g. a number, a list in the gateway GW to define what sort of message is being transmitted. This procedure provides an advantage when the gateway GW applied does not support any other form of transmission of numeric data. The gateway sends the information DATA via the second telecommunication network 1 to the terminal equipment TE.

To transmit information DATA from the user's terminal equipment TE to the service control point SCP, the user applies network-specific properties. For instance in the GSM system, such a property may be a short message or USSD. The second telecommunication network 1 transmits this information DATA to the gateway GW, which modifies it into a database interface operation understood by the service control point SCP. If the service control point SCP does not support transmission of other than numeric information, then the gateway GW may be provided with a table serving to convert fixed-format messages into database interface operations.

Fig. 2 presents an example of signalling according to the invention, where an intelligent network service parameter is changed via the short-message service of a digital mobile telephone network. The user sends a short message to a service number. The short message contains fixed-format information for modifying the service parameter. For example, the letter 'D' means deactivating the intelligent network service parameter and 'A' means activating it. In the operator's network, the short message is transmitted to the gateway GW, which updates the relevant data in the database of the service data point SDP. A subscriber in the digital mobile telephone network sends a short message, which is transmitted in accordance with the GSM standard to a short message service centre SC. The short message service centre SC sends the message to the SMS-GMSC, which performs an HLR enquiry based on the B-number defined by the subscriber. The HLR (Home Location Register) is e.g. a GSM system database containing information including subscriber data, subscriber location data, call control data, short-message services and billing data. 'B-number' means the receiver of the short message.

In this situation, the subscriber has selected a B-number value that points to a specific gateway GW. The gateway GW receives the short message sent by the SMS-GMSC and examines the A-number contained in it to determine the subscriber whose intelligent network parameters it has to change. By using this information and analysing the contents of the short message, the gateway GW knows which record in the database of the service data point SDP it has to change. After this, the gateway GW performs a WRITE operation that the service data point in question will understand. Next time when the intelligent network service is activated, the service control point SCP can check the user-defined parameter value in the service data point SDP.

Fig. 2 represents exchange of messages between the HLR of the SMS-GMSC and the gateway GW in accordance with the GSM MAP protocol. Between the gateway GW and the service control point SCP, the write operation of the database interface being used is applied. The two bottommost messages in the figure are applied if the calling subscriber is to be given optional information as to whether the database write operation was successful (as in the figure) or not.

In an embodiment of the invention, the gateway GW is also able to respond to an MAP-SendRoutingInfoForSM enquiry with its own address, in which case the SMS-GMSC sends the short message to the gateway GW. All the functionalities associated with the service are now in the same database interface.

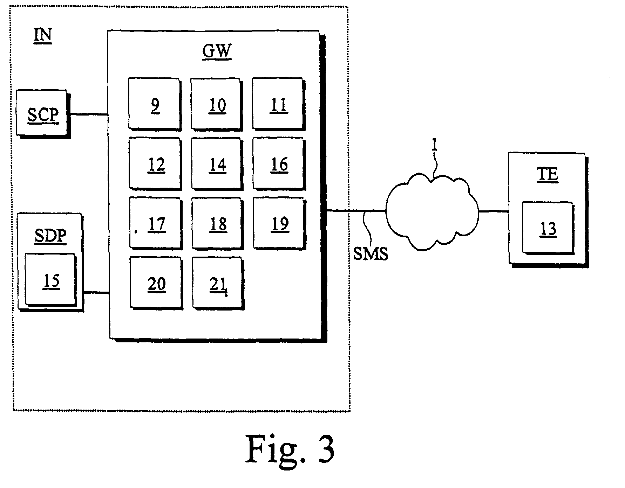

Fig. 3 is a diagrammatic representation of a system according to the invention. The terminal device TE is connected via the second telecommunication network to the gateway GW. The terminal equipment TE comprises means 13 for transmitting a service parameter in the form of a text message SMS to the gateway GW. The text message SMS may be a short message or e.g. a message consistent with the USSD or the WAP protocol, a byte-oriented or document-oriented message. The gateway GW is connected to the network components comprised in the intelligent network IN, the service control point SCP and the service data point SDP.

The gateway GW comprises means 9 and 14 for modification of an intelligent network service data parameter and/or service logic by using a protocol supported by the second telecommunication network 1. In addition, the gateway GW comprises table means 10 for performing a conversion between a fixed-format message supported by the second telecommunication network and a message supported by the intelligent network. Means 11 are used to carry out the write operation and means 12 to modify the data in the service logic of the service control point SCP and/or in the service data point SDP. Using means 15, the service data point returns an acknowledgement message to the gateway GW, which comprises means 16 for converting the acknowledgement message further into text message form and sending it to the terminal equipment TE. Means 19 are used to transmit information between the terminal equipment TE and the database interface in the form of a short message, means 20 using the USSD protocol and means 21 using the WAP protocol. To identify the record to be modified in the service data point SDP, the gateway GW uses means 17 for identification by the A-number and means 18 for identification by the contents of the text message.

The function of the gateway GW is seen by the service control point SCP as a function resembling the service data point SDP. The data flowing through the database interface is simple numeric data, which is converted by the gateway GW into a fixed-format message and applied to the interface connecting to the second telecommunication network. The gateway may be an independent device or it may form a part of the service control point SCP or the service data point SDP. The invention can be implemented in many types of systems supporting SS7 or other protocols.

The invention is not restricted to the examples of its embodiments described above, but many variations are possible within the scope of the inventive idea defined by the claims.

## Claims

1. Method for modifying an intelligent network service parameter in a telecommunication system comprising an intelligent network (IN), a service data point (SDP) comprised in the intelligent network (IN), a digital mobile telephone network (1), means for connecting the intelligent network (IN) to the mobile telephone network (1) and a terminal device (MS) connected to the mobile telephone network (1), **characterised in that** the service parameter is transmitted by means of the terminal device (MS) in the form of a text message (SMS) to a gateway (GW), the text message (SMS) is converted in the gateway (GW) into the form of a service parameter of the intelligent network (IN) and transmitted to the data point (SDP).

2. Method as defined in claim 1, **characterised in that** an acknowledgement message is returned from the service data point (SDP) to the gateway (GW), the acknowledgement message is converted into the form of a text message (SMS) and sent to the terminal device (MS).

3. Method as defined in claims 1 or 2, **characterised in that** the record to be modified in the service data point (SDP) is identified in the gateway (GW) by the calling subscriber number of the text message (SMS).

4. Method as defined in any one of claims 1 - 3, **characterised in that** the record to be modified in the service data point (SDP) is identified in the gateway (GW) by the contents of the text message (SMS).

5. Method as defined in any one of claims 1 - 4, **characterised in that** the information (SMS) is transmitted between the terminal device (MS) and the gateway (GW) in the form of a short message.

6. Method as defined in any one of claims 1 - 5, **characterised in that** the information (SMS) is transmitted between the terminal device (MS) and the gateway (GW) by using the USSD protocol.

7. Method as defined in any one of claims 1 - 6, **characterised in that** the information (SMS) is transmitted between the terminal device (MS) and the gateway (GW) by using the WAP protocol.

8. Telecommunication system for modification of an intelligent network service parameter, said system comprising an intelligent network (IN), a service data point (SDP) comprised in the intelligent network (IN), a digital mobile telephone network (1), means for connecting the intelligent network (IN) to the mobile telephone network (1) and terminal equipment (TE) connected to the mobile telephone network (1), **characterised in that** the system comprises means (13) for sending the service parameter in the form of a text message (SMS) from the terminal equipment (TE) to a gateway (GW), means (14) for converting the text message (SMS) in the gateway (GW) into the form of a service parameter of the intelligent network (IN) and transmitting it to the service data point (SDP) .

9. System as defined in claim 8, **characterised in that** the system comprises means (15) for returning an acknowledgement message from the service data point (SDP) to the gateway (GW), means (16) for converting the acknowledgement message in the gateway (GW) into the form of a text message (SMS) and sending it to the terminal equipment (TE).

10. System as defined in claim 8 or 9, **characterised in that** the gateway (GW) comprises means (17) by which the record to be modified in the service data point (SDP) is identified by the calling subscriber number of the text message (SMS).

11. System as defined in any one of claims 8 - 10, **characterised in that** the gateway (GW) comprises means (18) by which the record to be modified in the service data point (SDP) is identified by the contents of the text message (SMS).

12. System as defined in any one of claims 8 - 11, **characterised in that** the system comprises means (19) for transmission of information (SMS) between the terminal equipment (TE) and the gateway (GW) by using a short message.

13. System as defined in any one of claims 8 - 12, **characterised in that** the system comprises means (20) for transmission of information (SMS) between the terminal equipment (TE) and the gateway (GW) by using the USSD protocol.

14. System as defined in any one of claims 8 - 12, **characterised in that** the system comprises means (20) for transmission of information (SMS) between the terminal equipment (TE) and the gateway (GW) by using the WAP protocol.

## Patentansprüche

1. Verfahren zum Modifizieren eines intelligenten Netzwerk-Service-Parameters in einem Telekommunikationssystem, welches aufweist: ein intelligentes Netzwerk (IN), einen Service-Datenpunkt (SDP), welcher in dem intelligenten Netzwerk (IN) vorliegt, ein digitales Mobiltelefonnetzwerk (1), eine Vorrichtung zum Anschließen des intelligenten Netzwerks (IN) an das Mobiltelefonnetzwerk (1) und eine Endgerätevorrichtung (MS), welche an das Mobiltelefonnetzwerk (1) angeschlossen ist, **dadurch gekennzeichnet, dass** der Service-Parameter mit Hilfe der Endgerätevorrichtung (MS) in Form einer Textnachricht (SMS) an ein Gateway (GW) übertragen wird, die Textnachricht (SMS) in dem Gateway (GW) in die Form eines Service-Parameters des intelligenten Netzwerks (IN) gewandelt wird und an den Datenpunkt (SDP) übertragen wird.

2. Verfahren nach Anspruch 1,
**dadurch gekennzeichnet ,**
**dass** eine Bestätigungsnachricht von dem Service-Datenpunkt (SDP) an das Gateway (GW) zurückgeschickt wird, die Bestätigungsnachricht in die Form einer Textnachricht (SMS) gewandelt wird und an die Endgerätevorrichtung (MS) gesandt wird.

3. Verfahren nach Anspruch 1 oder 2,
**dadurch gekennzeichnet ,**
**dass** die Aufzeichnung, welche in dem Service-Datenpunkt (SDP) zu modifizieren ist, in dem Gateway (GW) durch die anrufende Teilnehmernummer der Textnachricht (SMS) identifiziert wird.

4. Verfahren nach einem der Ansprüche 1 bis 3,
**dadurch gekennzeichnet ,**
**dass** die Aufzeichnung, welche in dem Service-Datenpunkt (SDP) zu modifizieren ist, in dem Gateway (GW) durch den Inhalt der Textnachricht (SMS) identifiziert wird.

5. Verfahren nach einem der Ansprüche 1 bis 4,
**dadurch gekennzeichnet ,**
**dass** die Information (SMS) zwischen der Endgerätevorrichtung (MS) und dem Gateway (GW) in Form einer Kurznachricht übertragen wird.

6. Verfahren nach einem der Ansprüche 1 bis 5,
**dadurch gekennzeichnet ,**
**dass** die Information (SMS) zwischen der Endgerätevorrichtung (MS) und dem Gateway (GW) durch Benutzen des USSD-Protokolls übertragen wird.

7. Verfahren nach einem der Ansprüche 1 bis 6,
**dadurch gekennzeichnet ,**
**dass** die Information (SMS) zwischen der Endgerätevorrichtung (MS) und dem Gateway (GW) durch Benutzen des WAP-Protokolls übertragen wird.

8. Telekommunikationssystem zum Modifizieren eines intelligenten Netzwerk-Service-Parameters, wobei das System aufweist: ein intelligentes Netzwerk (IN), einen Service-Datenpunkt (SDP), welcher in dem intelligenten Netzwerk (IN) enthalten ist, ein digitales Mobiltelefonnetzwerk (1), eine Vorrichtung zum Anschließen des intelligenten Netzwerks (IN) an das Mobiltelefonnetzwerk (1) und ein Endgerät (TE), welches mit dem Mobiltelefonnetzwerk (1) verbunden ist, **dadurch gekennzeichnet, dass** das System aufweist: eine Vorrichtung (13) zum Senden des Service-Parameters in Form einer Textnachricht (SMS) von dem Endgerät (TE) an ein Gateway (GW), eine Vorrichtung (14) zum Wandeln der Textnachricht (SMS) in dem Gateway (GW) in die Form eines Service-Parameters des intelligenten Netzwerks (IN) und das Übertragen dieser an den Service-Datenpunkt (SDP).

9. System nach Anspruch 8,
**dadurch gekennzeichnet ,**
**dass** das System aufweist: eine Vorrichtung (15) zum Zurücksenden einer Bestätigungsnachricht von dem Service-Datenpunkt (SDP) an das Gateway (GW), eine Vorrichtung (16) zum Wandeln der Bestätigungsnachricht in dem Gateway (GW) in die Form einer Textnachricht (SMS) und Senden derselben an das Endgerät (TE) .

10. System nach Anspruch 8 oder 9,
**dadurch gekennzeichnet ,**
**dass** das Gateway (GW) eine Vorrichtung (17) aufweist, mit welcher die Aufzeichnung, welche in dem Datenpunkt (SDP) zu modifizieren ist, durch die anrufende Teilnehmernummer der Textnachricht (SMS) identifiziert ist.

11. System nach einem der Ansprüche 8 bis 10,
**dadurch gekennzeichnet ,**
**dass** das Gateway (GW) eine Vorrichtung (18) aufweist, mit welcher die Aufzeichnung, welche in dem Service-Datenpunkt (SDP) zu modifizieren ist, durch den Inhalt der Textnachricht (SMS) identifiziert ist.

12. System nach einem der Ansprüche 8 bis 11,
**dadurch gekennzeichnet ,**
**dass** das System eine Vorrichtung (19) für die Übertragung von Information (SMS) zwischen dem Endgerät (TE) und dem Gateway (GW) aufweist, indem eine Kurznachricht benutzt wird.

13. System nach einem der Ansprüche 8 bis 12,
**dadurch gekennzeichnet ,**
**dass** das System eine Vorrichtung (20) zur Übertragung von Information (SMS) zwischen dem Endgerät (TE) und dem Gateway (GW) aufweist, indem das USSD-Protokoll benutzt wird.

14. System nach einem der Ansprüche 8 bis 12,
**dadurch gekennzeichnet ,**
**dass** das System eine Vorrichtung (20) zum Übertragen von Information (SMS) zwischen dem Endgerät (TE) und dem Gateway (GW) aufweist, indem das WAP-Protokoll benutzt wird.

## Revendications

1. Procédé de modification d'un paramètre de service de réseau intelligent dans un système de télécommunications comprenant un réseau intelligent (IN), un point de données de service (SDP) compris dans le réseau intelligent (IN), un réseau téléphonique mobile numérique (1), un moyen destiné à connecter le réseau intelligent (IN) au réseau téléphonique mobile (1) et un dispositif terminal (MS) connecté au réseau téléphonique mobile (1), **caractérisé en ce que** le paramètre de service est transmis au moyen du dispositif terminal (MS) sous la forme d'un message texte (SMS) à une passerelle (GW), le message texte (SMS) est converti dans la passerelle (GW) sous la forme d'un paramètre de service du réseau intelligent (IN) et est transmis au point de données (SDP).

2. Procédé selon la revendication 1, **caractérisé en ce qu'**un message d'accusé de réception est renvoyé du point de données de service (SDP) à la passerelle (GW), le message d'accusé de réception est converti sous la forme d'un message texte (SMS) et est envoyé au dispositif terminal (MS).

3. Procédé selon la revendication 1 ou 2, **caractérisé en ce que** l'enregistrement à modifier dans le point de données de service (SDP) est identifié dans la passerelle (GW) par le numéro appelant du message texte (SMS).

4. Procédé selon l'une quelconque des revendications 1 à 3, **caractérisé en ce que** l'enregistrement à modifier dans le point de données de service (SDP) est identifié dans la passerelle (GW) par le contenu du message texte (SMS).

5. Procédé selon l'une quelconque des revendications 1 à 4, **caractérisé en ce que** les informations (SMS) sont transmises entre le dispositif terminal (MS) et la passerelle (GW) sous la forme d'un message court.

6. Procédé selon l'une quelconque des revendications 1 à 5, **caractérisé en ce que** les informations (SMS) sont transmises entre le dispositif terminal (MS) et la passerelle (GW) en utilisant le protocole USSD.

7. Procédé selon l'une quelconque des revendications 1 à 6, **caractérisé en ce que** les informations (SMS) sont transmises entre le dispositif terminal (MS) et la passerelle (GW) en utilisant le protocole WAP.

8. Système de télécommunications pour modification d'un paramètre de service de réseau intelligent, ledit système comprenant un réseau intelligent (IN), un point de données de service (SDP) compris dans le réseau intelligent (IN), un réseau téléphonique mobile numérique (1), un moyen destiné à connecter le réseau intelligent (IN) au réseau téléphonique mobile (1) et un équipement terminal (TE) connecté au réseau téléphonique mobile (1), **caractérisé en ce que** le système comprend un moyen (13) destiné à envoyer le paramètre de service sous la forme d'un message texte (SMS) de l'équipement terminal (TE) à une passerelle (GW), un moyen (14) destiné à convertir le message texte (SMS) dans la passerelle (GW) sous la forme d'un paramètre de service du réseau intelligent (IN) et à le transmettre au point de données de service (SDP).

9. Système selon la revendication 8, **caractérisé en ce que** le système comprend un moyen (15) destiné à renvoyer un message d'accusé de réception du point de données de service (SDP) à la passerelle (GW), un moyen (16) destiné à convertir le message d'accusé de réception dans la passerelle (GW) sous la forme d'un message texte (SMS) et à l'envoyer à l'équipement terminal (TE).

10. Système selon la revendication 8 ou 9, **caractérisé en ce que** la passerelle (GW) comprend un moyen (17) par lequel l'enregistrement à modifier dans le point de données de service (SDP) est identifié par le numéro appelant du message texte (SMS).

11. Système selon l'une quelconque des revendications 8 à 10, **caractérisé en ce que** la passerelle (GW) comprend un moyen (18) par lequel l'enregistrement à modifier dans le point de données de service (SDP) est identifié par le contenu du message texte (SMS).

12. Système selon l'une quelconque des revendications 8 à 11, **caractérisé en ce que** le système comprend un moyen (19) destiné à transmettre des informations (SMS) entre l'équipement terminal (TE) et la passerelle (GW) en utilisant un message court.

13. Système selon l'une quelconque des revendications 8 à 12, **caractérisé en ce que** le système comprend un moyen (20) destiné à transmettre des informations (SMS) entre l'équipement terminal (TE) et la passerelle (GW) en utilisant le protocole USSD.

14. Système selon l'une quelconque des revendications 8 à 12, **caractérisé en ce que** le système comprend un moyen (20) destiné à transmettre des informations (SMS) entre l'équipement terminal (TE) et la passerelle (GW) en utilisant le protocole WAP.
